# FASCICULE DE BREVET EUROPEEN

(11) **EP 2 254 760 B1**
(45) Date de publication et mention de la délivrance du brevet: **14.05.2014**
(21) Numéro de dépôt: 09721654.3
(22) Date de dépôt: 17.03.2009
(51) Int. Cl.: B60C 15/06, B60G 3/00, B60G 9/00, B60C 11/00, B60C 19/00

(54) **SYSTEME DE SUSPENSION DE VEHICULE ET PNEUMATIQUE POUR VEHICULE**
AUFHÄNGUNGSSYSTEM FÜR EIN FAHRZEUG UND REIFEN FÜR EIN FAHRZEUG
SUSPENSION SYSTEM FOR VEHICLE AND TYRE FOR VEHICLE

(30) Priorité: 17.03.2008 FR 0851697
(43) Date de publication de la demande: 01.12.2010
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: PERRIN, Frédéric, 63110 Beaumont (FR); LEVY, Nicolas, 63000 Clermont-Ferrand (FR)
(74) Mandataire: Diernaz, Christian
(86) Numéro de dépôt international: PCT/EP2009/053156
(87) Numéro de publication internationale: WO 2009/115529

(56) Documents cités:
- EP-A- 1 145 936
- FR-A- 2 902 698

## Description

L'invention concerne les ensembles routiers comprenant un véhicule de tourisme comprenant un essieu avant et un essieu arrière et un train ou ensemble de pneus pour équiper ces essieux et plus particulièrement les conditions d'assemblage spécifiques pour atteindre des performances de résistance au roulement améliorées sans pour autant dégrader la performance en usure des pneus.

L'évolution des véhicules de tourisme durant ces quinze dernières années, à iso gamme, se traduit aujourd'hui par une augmentation de la masse totale de l'ensemble roulant et par un éloignement du centre de gravité du véhicule par rapport au sol ainsi qu'un déplacement de ce centre de gravité vers l'avant du véhicule. Ceci a pour conséquence une augmentation sensible de l'écart de charge en statique et en dynamique entre les essieux en créant un délestage de l'essieu arrière au détriment de l'essieu avant. L'essieu arrière se trouve relativement peu chargé en statique et très fortement délesté lors des phases de freinage.

Par définition, chaque roue d'un essieu d'un véhicule fait un angle, dit angle de braquage, avec un plan perpendiculaire au sol et parallèle à la direction d'avancement du véhicule. Lorsque sur un même essieu les plans des roues de cet essieu convergent pour se couper vers l'avant du véhicule on parle de pince.

Pour qu'un véhicule conserve une bonne stabilité lors de manoeuvres brusques de type freinage, évitement d'un obstacle, changement de file, sans pour autant perdre en agrément de conduite et en vivacité, la pince arrière est passée, de valeurs relativement faibles, de l'ordre de 0,1 degré d'angle de braquage à chaque roue, à des valeurs plus élevées allant de 0,3 degré à 0,45 degré selon les conditions de chargement du véhicule.

Cette valeur de la pince est appliquée de manière symétrique aux deux ensembles roulant (pneu et roue) de l'essieu arrière. Ce réglage n'a en roulage ligne droite aucune utilité ; il permet une préparation du véhicule à une perturbation sur la trajectoire du véhicule en mettant une roue en configuration de braquage dans le sens d'une remise en ligne du véhicule, tout en pré contraignant le pneu concerné afin de le rendre plus réactif et lui permettre de générer une poussée transversale de rappel appropriée.

Bien entendu, ce réglage n'est pas sans conséquence sur l'usure des pneus de l'essieu arrière. Il est connu afin d'avoir une usure régulière et homogène sur toute la largeur de la bande de roulement des pneus de cette essieu, d'associer à cette pince un contre carrossage statique. L'angle de carrossage d'une roue est l'angle que fait, dans un plan perpendiculaire au sol et contenant l'axe de la roue, le plan de la roue avec le plan médian du véhicule. On parle de contre carrossage (ou de carrossage négatif) lorsque les plan des roues d'un même essieu se croisent au dessus du sol.

Toutefois, ces réglages statiques des roues de l'essieu arrière comme montré dans FR 2902698 sont générateurs d'une usure accélérée et d'un effort de traînée consommateur d'énergie par augmentation de la résistance au roulement de l'ensemble roulant.

Pour pallier l'augmentation de l'usure, des travaux ont été faits afin de mettre au point des matériaux de bande de roulement ayant une résistance à l'usure améliorée. Ces solutions bien que satisfaisantes trouvent actuellement des limites puisque d'un côté on améliore les performances des matériaux et de l'autre côté on continue d'augmenter les réglages statiques, toujours pour les mêmes raisons.

Un but de l'invention est de réduire la consommation de carburant d'un véhicule en diminuant la résistance au roulement de ce véhicule, par la détermination d'une nouvelle combinaison de réglages statiques du véhicule et de pneus appropriés.

Un ensemble routier selon l'invention est constitué d'un véhicule comprenant un essieu avant et un essieu arrière, et d'un train de pneus montés sur leur jantes de montage pour équiper l'essieu avant et l'essieu arrière de ce véhicule. Chaque pneu de ce véhicule comprend une région de sommet prolongée latéralement par des flancs se raccordant à des bourrelets destinés à être en contact avec une roue de montage ; chaque pneu comporte une armature de carcasse s'étendant d'un bourrelet à un autre bourrelet en passant dans les flancs et le sommet du pneu, la région de sommet comprenant une armature de renforcement surmontée radialement à l'extérieur par une bande de roulement.

Cette bande de roulement comprend radialement à l'extérieur une surface de roulement destinée à venir en contact avec la chaussée pendant le roulage du véhicule, une pluralité de rainures étant formées dans l'épaisseur de la bande.

Cet ensemble routier est tel que, à l'état neuf, l'épaisseur des bandes de roulement des pneus de l'essieu arrière est inférieure à l'épaisseur des bandes de roulement des pneus de l'essieu avant. L'épaisseur d'une bande de roulement est mesurée comme la distance moyenne séparant la surface radialement la plus à l'extérieur de l'armature de sommet d'un pneu et la surface de roulement de la bande de roulement à l'état neuf. En outre, les profondeurs des rainures des bandes de roulement des pneus équipant l'essieu arrière sont au moins égales à 3 mm et au plus égales à 5 mm tandis que les profondeurs des rainures des bandes de roulement des pneus équipant l'essieu avant est au moins égales à 5 mm, les profondeurs des rainures des bandes de roulement de l'essieu avant étant supérieures aux profondeurs des rainures des bandes de roulement de l'essieu arrière.

En outre, le véhicule a, au moins pour l'essieu arrière, des réglages statiques (carrossage, pince) proches de zéro, c'est-à-dire un carrossage de chaque ensemble roue-pneu sur ledit essieu compris entre -0.8 degré et +0.8 degré et une pince à la roue comprise entre -0.15 degré et +0.15 degré, les réglages statiques des ensembles roues-pneus arrière étant égaux en valeur absolue et symétriques par rapport à un plan perpendiculaire à la chaussée.

L'écart de profondeur des rainures les plus profondes entre les pneus de l'essieu arrière et les pneus de l'essieu avant correspond à la différence des épaisseurs des bandes de roulement de ces pneus.

L'ensemble routier selon l'invention permet une réduction sensible de la consommation en énergie du véhicule grâce à la combinaison de pneus ayant des bandes de roulement d'épaisseur réduite par rapport aux épaisseurs usuelles et à la quasi suppression (voire la suppression complète) des réglages statiques de pince.

En outre, il a été constaté de manière surprenante que cette combinaison n'était pas pénalisante sur le plan de l'usure des pneus : ainsi employés sur un véhicule ayant les réglages statiques préconisés, les pneus ayant une bande de roulement d'épaisseur réduite avaient toutefois une durée d'usage sensiblement équivalente à celle des pneus usuels d'épaisseur de bande de roulement usuelle sur un véhicule à pince élevée. On mesure là tout l'intérêt sur un plan environnemental puisque pour une même distance de roulage la quantité de gomme usée est réduite de façon sensible.

Avantageusement, les rainures des bandes de roulement des pneus équipant l'essieu avant ont des profondeurs au moins égales à 5 mm et au plus égales à 8 mm, et la plus petite des différences entre les profondeurs des rainures des bandes de roulement des pneus équipant l'essieu avant et les profondeurs des bandes de roulement des pneus équipant l'essieu arrière étant au moins égale à 1.5 mm.

Dans le présent document, le mot "rainure" signifie une cavité allongée ou découpure ayant une largeur telle que ses parois en vis-à-vis ne peuvent pas entrer en contact l'une sur l'autre ou encore une découpure dont les parois en vis-à-vis peuvent venir en contact l'une contre l'autre (dans ce dernier cas; on a affaire à ce qu'on nomme "incision").

Par ailleurs il a été constaté que l'invention pouvait être avantageusement combinée avec un taux de surface de rainures des bandes de roulement des pneus de l'essieu arrière au plus égal à 24% et inférieur au taux de surface de rainures des bandes de roulement des pneus de l'essieu avant. Ce taux de surface de rainures est égal au rapport de surface des rainures à la surface totale de la bande de roulement ; lorsque ce taux de surface de rainures est égal à zéro on peut considérer qu'il n'y a pas de rainures et lorsque ce taux est égal à 50%, cela signifie que la surface des rainures est sensiblement égale à la surface de la matière constituant la bande de roulement pouvant venir en contact avec la chaussée. L'invention permet donc, à usure identique, d'augmenter de façon sensible la surface de contact entre le pneu et la chaussée pour une même dimension de pneu et un même véhicule, ce qui est favorable en utilisation notamment en tenue de route.

Pour obtenir une bonne performance en roulage sur chaussée revêtue d'eau il est avantageux en combinaison avec ce taux de surface de rainures sur l'essieu arrière au plus égal à 24% d'équiper l'essieu avant avec des pneus dont les bandes de roulement ont un taux de surface au moins égal à 25%.

Pour réaliser un bon équilibre en roulage, il est avantageux de monter sur l'essieu arrière des pneus dont la rigidité transversale de la bande de roulement est au moins égale à la rigidité transversale de la bande de roulement des pneus de l'essieu avant et au plus égale à 1.4 fois cette rigidité transversale de la bande de roulement des pneus de l'essieu avant. La rigidité transversale d'une bande de roulement correspond à la rigidité de la partie du pneu comprise radialement entre l'extérieur de l'armature de sommet et la surface de roulement du pneu à l'état neuf. Cette rigidité peut être mesurée expérimentalement en isolant la bande de roulement du pneu ou encore par simulation numérique.

La rigidité transversale d'un pneu est mesurée aux conditions nominales d'usage précisées par les normes E.T.R.T.O. ("The European Tyre and Rim Technical Organisation"). Pour cela, on monte le pneu dont on veut obtenir la rigidité transversale de sa bande de roulement (partie comprise entre l'armature de sommet du pneu et la surface de roulement de la bande), sur sa jante de montage puis on le gonfle à sa pression nominale et on lui applique une charge nominale. Le pneu étant ainsi écrasé sur un sol adhérent, on impose, dans une direction parallèle à l'axe de rotation, un déplacement du sol sur lequel s'appuie le pneu et on mesure l'effort correspondant. La courbe reliant l'effort en fonction au déplacement imposé permet d'évaluer une rigidité transversale au voisinage de l'origine de ladite courbe.

De façon préférentielle, outre l'essieu arrière, l'essieu avant a également des réglages statiques (carrossage, pince) qui sont proches de zéro, c'est-à-dire un carrossage de chaque ensemble roue-pneu sur ledit essieu compris entre -0.8 degré et +0.8 degré et une pince à la roue comprise entre -0.15 degré et +0.15 degré, les réglages statiques des ensembles roues-pneus d'un même essieu étant égaux en valeur absolue et symétriques par rapport un plan perpendiculaire à la chaussée.

De façon avantageuse, l'ensemble routier selon l'invention est tel que les pneus de l'essieu arrière sont gonflés à une pression de gonflage supérieure à la pression de gonflage des pneus de l'essieu avant, l'écart de pression étant au moins égal à 0.4 bar.

Dans une autre variante préférentielle, l'ensemble routier selon l'invention emploie des pneus sur l'essieu avant et sur l'essieu arrière qui ont une dimension identique, cette dimension étant défmie par la norme E.T.R.T.O., ce qui autorise un marquage dimensionnel identique sur chacun des pneus à l'exception de la position desdits sur le véhicule.

D'autres caractéristiques et avantages de l'invention ressortent de la description faite ci-après en référence au dessin unique annexé qui montre, à titre d'exemple non limitatif, une variante de réalisation d'un pneu objet de l'invention.

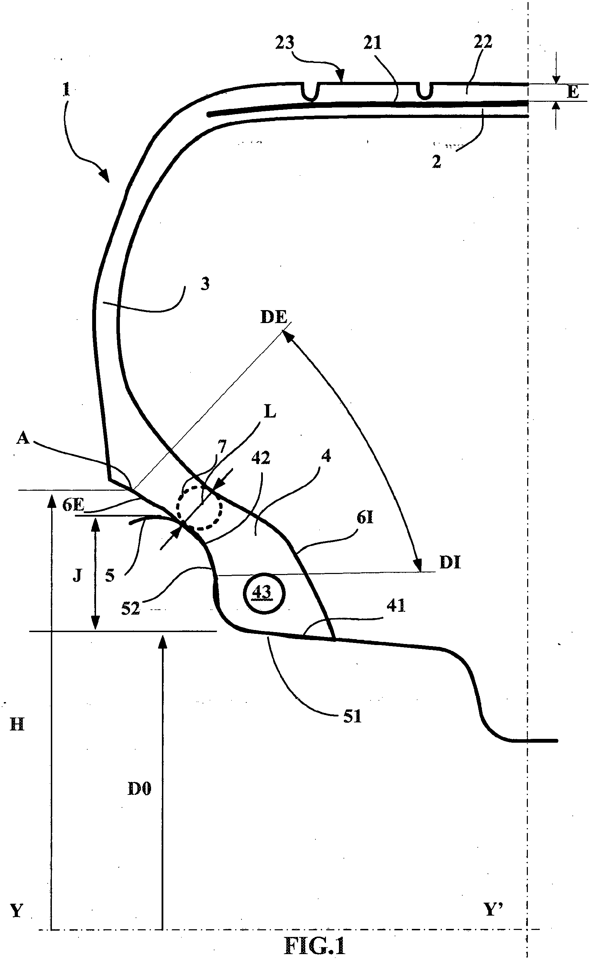

La figure 1 montre une coupe d'un pneu utilisé pour réaliser la configuration de l'invention.

La figure unique jointe à la présente description montre une vue partielle d'un pneu radial 1 utilisé dans la combinaison selon l'invention, ce pneu étant monté sur une jante de montage 5 et gonflé à sa pression d'usage. Ce pneu 1 vu dans un plan de coupe méridien, c'est-à-dire dire dans un plan contenant l'axe de rotation (YY'), comprend un bourrelet 4 en contact avec la jante de montage 5, ce bourrelet 4 étant prolongé radialement vers l'extérieur par un flanc 3, ce dernier se terminant par une partie de sommet 2.

La jante de montage 5 comprend un siège 51 incliné par rapport à la direction de l'axe de rotation YY', ce siège de jante étant destiné à recevoir en appui le siège 41 de bourrelet. Le siège de jante 51 est prolongé axialement et radialement vers l'extérieur par un rebord de jante 52 contre lequel vient s'appuyer le bourrelet du pneu. Le diamètre nominal de la jante (Do) est mesuré selon les prescriptions de la norme E.T.R.T.O. (The European Tyre and Rim Techniçal Organisation), sensiblement au point de raccordement du siège de jante et du rebord de jante. La hauteur (J) du rebord de jante est égale à la moitié de la différence entre le diamètre du cercle centré sur l'axe de rotation et passant par les points du rebord radialement les plus éloignés dudit axe et le diamètre nominal (Do).

Ce pneu comprend une armature de carcasse, non montrée dans cette figure, qui est formée d'une pluralité de renforts faisant un angle égal ou proche de 90 degrés avec une direction tangente à la direction circonférentielle (c'est-à-dire une direction perpendiculaire au plan de coupe de la figure 1). Par ailleurs, cette partie de sommet est renforcée par une armature de sommet 21 surmonté d'une bande de roulement 22 présentant une surface radialement externe destinée à venir en contact avec la chaussée pendant le roulage (cette surface est dite surface de roulement 23).

Cette bande de roulement 22 a une épaisseur moyenne E, mesurée comme la distance moyenne entre la surface de roulement 23 et la surface radialement la plus à l'extérieur de l'armature de sommet 21. Cette bande de roulement est pourvue d'une pluralité d'éléments de reliefs délimités par des rainures d'orientation circonférentielle et méridienne (dans la direction YY'). Le rapport entre la surface totale des rainures et la surface totale de l'empreinte de contact du pneu (cette dernière étant obtenue comme la surface délimitée par le contour le plus à l'extérieur de ladite empreinte de contact) est appelé taux d'entaillement.

Le bourrelet 4 est renforcé par une armature de renforcement 43 dans la direction circonférentielle autour de laquelle l'armature de carcasse vient s'ancrer. Le bourrelet est limité par une surface interne (contre laquelle agit la pression de gonflage) et une surface externe (en partie en contact avec le rebord de jante). Ces surfaces interne et externe coupent le plan de la figure 1 respectivement suivant un profil interne 61 et un profil externe 6E.

On définit pour ce bourrelet une cote d'épaisseur (L) comme étant l'épaisseur minimale du bourrelet entre la partie radialement la plus à l'extérieur de l'armature de renfort circonférentiel 43 (délimitée par une droite DI parallèle à l'axe de rotation) et une droite DE perpendiculaire au profil interne 61 et passant par un point A situé à une distance H de l'axe de rotation égale à la valeur (exprimée en mm) du rayon du cercle centré sur l'axe de rotation et passant par les points radialement les plus à l'extérieur du rebord de jante augmentée de 5 mm. Dans le cas présent, la hauteur (J) du rebord de jante est égale à 17.2 mm.

Cette cote (L) est mesurée en pratique de la façon suivante : (L) est égal au diamètre maximum d'un cercle 7 contenu entièrement entre les profils interne 6I et externe 6E de bourrelet entre la droite DI et la droite DE. Préférentiellement, cette cote (L) est au plus égale à 11 mm pour des dimensions usuelles de pneus pour véhicules de tourisme.

De façon usuelle, cette cote (L) varie selon les diamètres de jante, ces derniers étant exprimés en pouce ("), un pouce valant 25.4 mm. Cette cote (L) respecte les limites données dans le Tableau 1 ci après:

| Tableau 1 | |
|---|---|
| Diamètre au siège de bourrelet | L |
| ≤ 13" | 8 mm |
| 14" | 8.5 mm |
| 15" | 8.5 mm |
| 16" | 9.5 mm |
| 17" | 9.5 mm |
| 18" | 10 mm |
| 19" | 10mm |
| >19" | 10.5 mm |

Des relevés de consommation ont été effectués lors de roulages avec un même véhicule pour comparer une configuration de référence selon l'art antérieur et une configuration selon l'invention.

Dans la configuration de référence, le test de roulage est fait avec un véhicule Alfa Roméo 156 SW GTA 3.2 1 V6 (traction avant) dont les réglages étaient ceux d'origine déterminés par le constructeur, à savoir :
Pince essieu AV : -1.2 ±0.5 mm soit -0.16° à la roue (on a ici une pince négative, c'est-à-dire une ouverture)
Carrossage essieu AV : - 0° 50' à la roue
Pince essieu AR : +1.6 ±0.5 mm soit 0.21° à la roue
Carrossage essieu AR : -1° 20' à la roue

Les pneus montés sur l'essieu avant et sur l'essieu arrière sont des pneus de même dimension 225/45 R 17 94W.

Les pneus de l'essieu avant présentent les caractéristiques suivantes :
Profondeur des rainures égale à 8 mm ; (profondeur des rainures à l'état neuf);
Distance entre le fond des rainures et l'extérieur de l'armature de sommet : 1.8mm;
Épaisseur de la bande de roulement : 9.8 mm
Taux de surface de rainures : 30 % (ratio entre la surface de rainure et la surface totale de l'empreinte de contact sous pression d'usage et charge nominale) ;
Pression de gonflage à froid : 2.5 bars
Les pneus de l'essieu arrière présentent les caractéristiques suivantes :
Profondeur des rainures 8 mm (= profondeur des rainures à l'état neuf du pneu) ;
Distance entre le fond des rainures et l'extérieur de l'armature de sommet : 1.8 mm;
(0052) Épaisseur de la bande de roulement : 9.8 mm
(0053) Taux de surface de rainures : 30 % ;
(0054) Pression de gonflage à froid : 2.3 bars.

Dans la configuration selon l'invention, le même test de roulage est fait avec le même véhicule dont les réglages ont été modifiés pour valoir :
Pince AV : 0°
Carrossage AV : 0°
Pince AR : 0°
Carrossage AR: 0°

Les pneus de l'essieu avant présentent les caractéristiques suivantes :
Profondeur des rainures à l'état neuf égale à 6.4 mm ;
Distance entre le fond des rainures et l'extérieur de l'armature de sommet : 1.8 mm ;
Épaisseur de la bande de roulement : 8.2 mm
Taux de surface de rainures : 27 % ;
Pression de gonflage à froid : 2.5 bars

Les pneus de l'essieu arrière présentent les caractéristiques suivantes à l'état neuf :
Profondeur des rainures à l'état neuf égale à 4 mm
Distance entre le fond des rainures et l'extérieur de l'armature de sommet : 1.8 mm.
Épaisseur de la bande de roulement : 5.8 mm
Taux de surface de rainures : 22 % ;
Pression de gonflage à froid : 2.8 bars ;
Bourrelets de largeur réduite, c'est-à-dire bourrelet ayant une cote L égale à 7.5 mm (soit 71 % de la même cote L des pneus de la configuration de référence).

Avec chacune de ces deux configurations, il a été procédé à un roulage sur une distance de 78 km à une vitesse stabilisée de 100 km/h, avec la répartition suivante de charge entre l'essieu avant et l'essieu arrière: charge à l'essieu avant 900 daN, charge à l'essieu arrière 700 daN.

Lors de chaque roulage une mesure de consommation de carburant à été effectué tous les 7.8 km. À partir de ces dix mesures, une consommation moyenne a été évaluée.

L'économie de consommation avec la configuration selon l'invention comparée à la configuration de référence, pour une vitesse stabilisée de 100 km/h, est de l'ordre de 0.24 litre par 100 kilomètres parcourus, soit un gain de 2.38% de consommation.

| | Consommation en litre/100 km |
|---|---|
| Configuration de référence | 10.07 |
| Invention | 9.83 |

En outre, des mesures de résistance au roulement ont été réalisées pour chaque configuration. Ces mesures ont été effectuées pour chaque pneu monté sur sa jante et à ses conditions de charge et de pression sur le véhicule ayant servi aux mesures de consommation.

La mesure de résistance au roulement est effectuée suivant la méthode décrite dans la norme ISO 18164 en utilisant les conditions d'usage sur le véhicule de test. par un roulage de chaque ensemble roue, pneu sur volant à une vitesse stabilisée de 80 km/h.

Le tableau 2 ci après donne les valeurs moyennes pour chaque position sur le véhicule pour la configuration de référence et celle de l'invention :

| Tableau 2 | | |
|---|---|---|
| | résistance au roulement Pneu AV | résistance au roulement pneu AR |
| Référence | 9.00 kg/T | 9.52 kg/T |
| Invention | 8.65 kg/T | 6.83 kg/T |

Ces mesures montrent que la configuration selon l'invention permet un gain en résistance au roulement par rapport à la configuration de référence. Ce gain se chiffre à 1.55 kg/T par pneu à 80 km/h. (moyenne des pneus des deux essieux). Ce résultat correspond à la moyenne de la résistance au roulement d'un pneu de l'essieu avant mesurée à sa pression d'usage et à la charge correspondant à la charge du pneu sur cet essieu pour le véhicule considéré (charge sur essieu de 450 daN et pression de gonflage de 2.5 bars) et de la résistance au roulement d'un pneu arrière mesurée à sa pression d'usage et à la charge correspondant à la charge du pneu sur le véhicule (charge sur essieu de 350 daN et pression de gonflage de 2.3 bars pour la configuration de référence et 350 daN et 2.8 bars pour la configuration selon l'invention).

Préférentiellement, la cote L des pneus de la combinaison selon l'invention doivent respecter les limites supérieures données dans le Tableau 3 ci après en fonction des diamètres de jante :

| Tableau 3 | |
|---|---|
| Diamètre au siège de bourrelet | L |
| ≤13" | 7.5 mm |
| 14" | 8 mm |
| 15" | 8 mm |
| 16 | 8 mm |
| 17" | 8 mm |
| 18" | 8.5 mm |
| 19" | 9 mm |
| > 19" | 9.5 mm |

Préférentiellement, la bande de roulement de chaque pneu étant pourvue d'une pluralité de rainures délimitant des éléments de relief, le taux d'entaillement (c'est-à-dire le rapport entre la surface de creux et la surface totale de l'empreinte de contact sous pression d'usage et charge nominale) est au plus égal à 24% de la surface totale de la bande de roulement.

De manière avantageuse et comme cela a été fait pour les tests présentés ici, il est judicieux d'associer à cette invention une pression de gonflage supérieure à la pression de gonflage des pneus d'un même véhicule conservant des réglages statiques élevés. Il est ainsi avantageux que les pneus de l'essieu arrière soient gonflés à une pression de gonflage supérieure à la pression de gonflage des pneus de l'essieu avant, l'écart de pression étant au moins égal à 0.4 bar.

## Revendications

1. Ensemble routier constitué d'un véhicule comprenant un essieu avant et un essieu arrière, et d'un train de pneus montés sur leur jante de montage pour équiper l'essieu avant et l'essieu arrière de ce véhicule, chaque pneu (1) de ce véhicule comprenant une région de sommet (2) prolongée latéralement par des flancs (3) se raccordant à des bourrelets (4) destinés à être en contact avec une roue de montage (5), chaque pneu comportant une armature de carcasse s'étendant d'un bourrelet à un autre bourrelet en passant dans les flancs et le sommet du pneu, la région de sommet comprenant une armature de renforcement (21) surmontée radialement à l'extérieur par une bande de roulement (22), cette bande de roulement comprenant radialement à l'extérieur une surface de roulement (23) destinée à venir en contact avec la chaussée pendant le roulage du véhicule, une pluralité de rainures étant formées dans l'épaisseur de la bande, cet ensemble routier étant **caractérisé en ce que** :
■ les profondeurs des rainures des bandes de roulement, à l'état neuf, des pneus équipant l'essieu arrière sont au moins égales à 3 mm et au plus égales à 5 mm
■ les profondeurs des rainures des bandes de roulement, à l'état neuf, des pneus équipant l'essieu avant sont au moins égales à 5 mm, les profondeurs des rainures des bandes de roulement de l'essieu avant étant supérieures aux profondeurs des rainures des bandes de roulement de l'essieu arrière, et **en ce que**,
■ le véhicule a, au moins pour l'essieu arrière, des réglages statiques (carrossage, pince) proches de zéro, c'est-à-dire un carrossage de chaque ensemble roue-pneu sur ledit essieu compris entre -0.8 degré et +0.8 degré et une pince à la roue comprise entre -0.15 degré et +0.15 degré, les réglages statiques des ensembles roues-pneus arrière étant égaux en valeur absolue et symétriques par rapport à un plan perpendiculaire à la chaussée.

2. Ensemble routier selon la revendication 1 **caractérisé en ce que** les rainures des bandes de roulement des pneus équipant l'essieu avant ont des profondeurs au moins égales à 5 mm et au plus égales à 8 mm, la plus petite des différences entre les profondeurs des rainures des bandes de roulement des pneus équipant l'essieu avant et les profondeurs des bandes de roulement des pneus équipant l'essieu arrière étant au moins égale à 1.5 mm.

3. Ensemble routier selon la revendication 1 ou la revendication 2 **caractérisé en ce que** le taux de surface de rainures des bandes de roulement des pneus de l'essieu arrière est au plus égal à 24% et est inférieur au taux de surface de rainures des bandes de roulement des pneus de l'essieu avant, ce taux de surface de rainures étant égal au rapport de surface des creux à la surface totale de la bande de roulement.

4. Ensemble routier selon la revendication 3 **caractérisé en ce que** le taux de surface de rainures des bandes de roulement des pneus de l'essieu avant est au moins égal à 25%.

5. Ensemble routier selon l'une des revendications 1 à 4 **caractérisé en ce que** la rigidité transversale de la bande de roulement des pneus de l'essieu arrière dans les conditions nominales d'usage précisées par les normes E.T.R.T.O. ("The European Tyre and Rim Technical Organisation"), est au moins égale à la rigidité transversale de la bande de roulement des pneus de l'essieu avant et au plus égale à 1.4 fois la rigidité transversale de la bande de roulement des pneus de l'essieu avant.

6. Ensemble routier selon l'une des revendications 1 à 5 **caractérisé en ce que** les réglages statiques (carrossage, pince) de l'essieu avant sont proches de zéro, c'est-à-dire que le carrossage de chaque ensemble roue-pneu sur ledit essieu est compris entre -0.8 degré et +0.8 degré et que la pince à la roue est comprise entre -0.15 degré et +0.15 degré, les réglages statiques des pneus de l'essieu avant étant égaux en valeur absolue et symétriques par rapport à un plan perpendiculaire à la chaussée.

7. Ensemble routier selon l'une des revendications 1 à 6 **caractérisé en ce que** les pneus de l'essieu arrière sont gonflés à une pression de gonflage supérieure à la pression de gonflage des pneus de l'essieu avant, l'écart de pression étant au moins égal à 0.4 bar.

8. Ensemble routier selon l'une des revendications 1 à 7 **caractérisé en ce que** chaque bourrelet des pneus de l'essieu arrière a une largeur minimale (L) au plus égale à 11 mm, cette largeur minimale étant définie comme étant l'épaisseur minimale de toute section du bourrelet située entre la tringle et un point situé radialement à l'extérieur et à une distance (H) de l'axe de rotation égale à la valeur, exprimée en millimètres, du rayon du cercle centré sur l'axe de rotation et passant par les points du rebord de jante radialement les plus à l'extérieur augmentée de 5 mm.

9. Ensemble routier selon l'une quelconque des revendications 1 à 8 **caractérisé en ce que** selon le diamètre au siège de bourrelet la largeur minimale L des bourrelets est inférieure à la valeur correspondante donnée dans le tableau :
| Diamètre au siège de bourrelet | L |
|---|---|
| ≤ 13" | 8 mm |
| 14" | 8.5 mm |
| 15" | 8.5 mm |
| 16" | 9.5 mm |
| 17" | 9.5 mm |
| 18" | 10 mm |
| 19" | 10 mm |
| > 19" | 10.5 mm |

10. Ensemble routier selon l'une quelconque des revendications 1 à 8 **caractérisé en ce que** selon le diamètre au siège de bourrelet la largeur minimale L des bourrelets est inférieure à la valeur correspondante donnée dans le tableau :
| Diamètre au siège de bourrelet | L |
|---|---|
| ≤ 13" | 7.5 mm |
| 14" | 8 mm |
| 15" | 8 mm |
| 16" | 8 mm |
| 17" | 8 mm |
| 18" | 8.5 mm |
| 19" | 9 mm |
| > 19" | 9.5 mm |

11. Ensemble routier selon l'une quelconque des revendications 1 à 10 **caractérisé en ce que** la dimension des pneus de l'essieu avant est identique à la dimension des pneus de l'essieu arrière, la dimension d'un pneu étant définie par la norme E.T.R.T.O..

## Patentansprüche

1. Straßenverkehrseinheit bestehend aus einem Fahrzeug, das eine Vorderachse und eine Hinterachse enthält, und aus einem Satz Reifen, die auf ihre Montagefelge montiert sind, um die Vorderachse und die Hinterachse dieses Fahrzeugs zu bestücken, wobei jeder Reifen (1) dieses Fahrzeugs einen Scheitelbereich (2) aufweist, der seitlich von Flanken (3) verlängert wird, die mit Wülsten (4) verbunden sind, welche dazu bestimmt sind, mit einem Montagerad (5) in Kontakt zu sein, wobei jeder Reifen eine Karkassenbewehrung aufweist, die sich von einem Wulst zu einem anderen Wulst erstreckt, indem sie durch die Flanken und den Scheitel des Reifens verläuft, wobei der Scheitelbereich eine Verstärkungsbewehrung (21) enthält, die radial außen von einem Laufstreifen (22) überlagert wird, wobei dieser Laufstreifen radial außen eine Lauffläche (23) enthält, die dazu bestimmt ist, während des Fahrens des Fahrzeugs mit der Straße in Kontakt zu kommen, wobei eine Vielzahl von Rillen in der Dicke des Streifens geformt sind, wobei diese Straßenverkehrseinheit **dadurch gekennzeichnet ist, dass**:
• die Tiefen der Rillen der Laufstreifen im Neuzustand der die Hinterachse bestückenden Reifen mindestens gleich 3 mm und höchstens gleich 5 mm sind,
• die Tiefen der Rillen der Laufstreifen im Neuzustand der die Vorderachse bestückenden Reifen mindestens gleich 5 mm sind, wobei die Tiefen der Rillen der Laufstreifen der Vorderachse größer sind als die Tiefen der Rillen der Laufstreifen der Hinterachse, und dass
• das Fahrzeug zumindest für die Hinterachse statische Einstellungen (Radsturz, Vorspur) nahe Null hat, d.h. einen Radsturz jeder Rad-Reifen-Einheit auf der Achse zwischen -0,8 Grad und +0,8 Grad und eine Vorspur am Rad zwischen -0,15 Grad und +0,15 Grad, wobei die statischen Einstellungen der hinteren Rad-Reifen-Einheiten im Absolutwert gleich und bezüglich einer Ebene lotrecht zur Straße symmetrisch sind.

2. Straßenverkehrseinheit nach Anspruch 1, **dadurch gekennzeichnet, dass** die Rillen der Laufstreifen der die Vorderachse bestückenden Reifen Tiefen mindestens gleich 5 mm und höchstens gleich 8 mm haben, wobei die kleinste der Differenzen zwischen den Tiefen der Laufstreifen der die Vorderachse bestückenden Reifen und den Tiefen der Laufstreifen der die Hinterachse bestückenden Reifen mindestens gleich 1,5 mm ist.

3. Straßenverkehrseinheit nach Anspruch 1 oder Anspruch 2, **dadurch gekennzeichnet, dass** die Flächenrate von Rillen der Laufstreifen der Reifen der Hinterachse höchstens gleich 24% und geringer als die Flächenrate von Rillen der Laufstreifen der Reifen der Vorderachse ist, wobei diese Flächenrate von Rillen gleich dem Flächenverhältnis der Vertiefungen zur Gesamtfläche des Laufstreifens ist.

4. Straßenverkehrseinheit nach Anspruch 3, **dadurch gekennzeichnet, dass** die Flächenrate von Rillen der Laufstreifen der Reifen der Vorderachse mindestens gleich 25% ist.

5. Straßenverkehrseinheit nach einem der Ansprüche 1 bis 4, **dadurch gekennzeichnet, dass** die Quersteifigkeit des Laufstreifens der Reifen der Hinterachse unter den von den Normen E.T.R.T.O. ("The European Tyre and Rim Technical Organisation") angegebenen Nutzungs-Nennbedingungen mindestens gleich der Quersteifigkeit des Laufstreifens der Reifen der Vorderachse und höchstens gleich dem 1,4-Fachen der Quersteifigkeit des Laufstreifens der Reifen der Vorderachse ist.

6. Straßenverkehrseinheit nach einem der Ansprüche 1 bis 5, **dadurch gekennzeichnet, dass** die statischen Einstellungen (Radsturz, Vorspur) der Vorderachse nahe Null sind, d.h. dass der Radsturz jeder Rad-Reifen-Einheit auf der Achse zwischen -0,8 Grad und +0,8 Grad liegt, und dass die Vorspur am Rad zwischen -0,15 Grad und +0,15 Grad liegt, wobei die statischen Einstellungen der Reifen der Vorderachse im Absolutwert gleich und bezüglich einer Achse lotrecht zur Straße symmetrisch sind.

7. Straßenverkehrseinheit nach einem der Ansprüche 1 bis 6, **dadurch gekennzeichnet, dass** die Reifen der Hinterachse auf einen Luftdruck aufgepumpt sind, der höher ist als der Luftdruck der Reifen der Vorderachse, wobei die Druckabweichung mindestens gleich 0,4 Bar ist.

8. Straßenverkehrseinheit nach einem der Ansprüche 1 bis 7, **dadurch gekennzeichnet, dass** jeder Wulst der Reifen der Hinterachse eine Mindestbreite (L) höchstens gleich 11 mm hat, wobei diese Mindestbreite als die Mindestdicke jedes Querschnitts des Wulstes definiert wird, der sich zwischen dem Wulstkern und einem Punkt befindet, der sich radial außen und in einem Abstand (H) von der Drehachse gleich dem Wert, ausgedrückt in Millimeter, des Radius des auf die Drehachse zentrierten Kreises und durch die radial am weitesten außen liegenden Punkte des Felgenhorns verlaufend, erhöht um 5 mm, befindet.

9. Straßenverkehrseinheit nach einem der Ansprüche 1 bis 8, **dadurch gekennzeichnet, dass** gemäß dem Durchmesser am Wulstsitz die Mindestbreite L der Wülste geringer als der entsprechende Wert ist, der in der Tabelle angegeben wird:
| Durchmesser am Wulstsitz | L |
|---|---|
| ≤13" | 8 mm |
| 14" | 8,5 mm |
| 15" | 8,5 mm |
| 16" | 9,5 mm |
| 17" | 9,5 mm |
| 18" | 10 mm |
| 19" | 10 mm |
| >19" | 10,5 mm |

10. Straßenverkehrseinheit nach einem der Ansprüche 1 bis 8, **dadurch gekennzeichnet, dass** gemäß dem Durchmesser am Wulstsitz die Mindestbreite L der Wülste geringer als der entsprechende Wert ist, der in der Tabelle angegeben wird:
| Durchmesser am Wulstsitz | L |
|---|---|
| ≤13" | 7,5 mm |
| 14" | 8 mm |
| 15" | 8 mm |
| 16" | 8 mm |
| 17" | 8 mm |
| 18" | 8,5 mm |
| 19" | 9 mm |
| >19" | 9,5 mm |

11. Straßenverkehrseinheit nach einem der Ansprüche 1 bis 10, **dadurch gekennzeichnet, dass** die Abmessung der Reifen der Vorderachse gleich der Abmessung der Reifen der Hinterachse ist, wobei die Abmessung eines Reifens von der Norm E.T.R.T.O. definiert wird.

## Claims

1. Road-going assembly consisting of a vehicle comprising a front axle and a rear axle, and of a set of tyres which are mounted on their mounting rim in order to be fitted to the front axle and the rear axle of this vehicle, each tyre (1) of this vehicle comprising a crown region (2) extended laterally by sidewalls (3) which connect to beads (4) intended to be in contact with a mounting wheel (5), each tyre comprising a carcass reinforcement running from one bead to another bead via the sidewalls and the crown of the tyre, the crown region comprising a reinforcement (21) surmounted radialy on the outside by a tread (22), this tread comprising, radialy on the outside, a tread surface (23) intended to come into contact with the road surface when the vehicle is running, a plurality of grooves being formed in the thickness of the tread, this road-going assembly being **characterized in that**:
■ the depths of the grooves of the treads**, in the as-new state,** of the tyres fitted to the rear axle are at least equal to 3 mm and at most equal to 5 mm
■ the depths of the grooves of the treads**, in the as-new state,** of the tyres fitted to the front axle are at least equal to 5 mm, the depths of the grooves of the treads of the front axle being greater than the depths of the grooves of the treads of the rear axle, and **in that**,
■ the vehicle has, at least in the case of the rear axle, static setups (camber, toe-in) of close to zero, that is to say a camber of each wheel-tyre assembly on the said axle of between -0.8 degrees and +0.8 degrees and a toe-in at the wheel of between -0.15 degrees and +0.15 degrees, the static setups of the rear wheel-tyre assemblies being equal in terms of absolute value and symmetric with respect to a plane perpendicular to the road surface.

2. Road-going assembly according to Claim 1, **characterized in that** the grooves of the treads of the tyres fitted to the front axle have depths at least equal to 5 mm and at most equal to 8 mm, the smallest of the differences between the depths of the grooves of the treads of the tyres fitted to the front axle and the depths of the treads of the tyres fitted to the rear axle being at least equal to 1.5 mm.

3. Road-going assembly according to Claim 1 or Claim 2, **characterized in that** the level of grooved area of the treads of the tyres of the rear axle is at most equal to 24% and is less than the level of grooved area of the treads of the tyre of the front axle, this level of grooved area being equal to the ratio of the surface area of the sunken regions to the total surface area of the tread.

4. Road-going assembly according to Claim 3, **characterized in that** the level of grooved area of the treads of the tyres of the front axle is at least equal to 25%.

5. Road-going assembly according to one of Claims 1 to 4, **characterized in that** the transverse rigidity of the tread of the tyres of the rear axle under the nominal conditions of use laid down by the E.T.R.T.O. (European Tyre and Rim Technical Organization) standards is at least equal to the transverse rigidity of the tread of the tyres of the front axle and at most equal to 1.4 times the transverse rigidity of the tread of the tyres of the front axle.

6. Road-going assembly according to one of Claims 1 to 5, **characterized in that** the static setups (camber, toe-in) of the front axle are close to zero, that is to say that the camber of each wheel-tyre assembly on the said axle is between -0.8 degrees and +0.8 degrees and that the toe-in at each wheel is between -0.15 degrees and +0.15 degrees, the static setups of the tyres of the front axle being equal in terms of absolute value and symmetric with respect to a plane perpendicular to the road surface.

7. Road-going assembly according to one of Claims 1 to 6, **characterized in that** the tyres of the rear axle are inflated to an inflation pressure higher than the inflation pressure of the tyres of the front axle, the difference in pressure being at least equal to 0.4 bar.

8. Road-going assembly according to one of Claims 1 to 7, **characterized in that** each bead of the tyres of the rear axle has a minimum width (L) at most equal to 11 mm, this minimum width being defined as being the minimum thickness of any cross section of the bead lying between the bead wire and a point situated radialy on the outside and at a distance (H) from the axis of rotation equal to the value, expressed in millimetres, of the radius of the circle centred on the axis of rotation and passing through the radialy outermost points on the rim flange, increased by 5 mm.

9. Road-going assembly according to any one of Claims 1 to 8, **characterized in that**, according to the diameter at the bead seat, the minimum width L of the beads is less than the corresponding value given in the table:
| Diameter at the bead seat | L |
|---|---|
| ≤ 13" | 8 mm |
| 14" | 8.5 mm |
| 15" | 8.5 mm |
| 16" | 9.5 mm |
| 17" | 9.5 mm |
| 18" | 10 mm |
| 19" | 10 mm |
| > 19" | 10.5 mm |

10. Road-going assembly according to any one of Claims 1 to 8, **characterized in that**, according to the diameter at the bead seat, the minimum width L of the beads is less than the corresponding value given in the table:
| Diameter at the bead seat | L |
|---|---|
| ≤ 13" | 7.5 mm |
| 14" | 8 mm |
| 15" | 8 mm |
| 16" | 8 mm |
| 17" | 8 mm |
| 18" | 8.5 mm |
| 19" | 9 mm |
| > 19" | 9.5 mm |

11. Road-going assembly according to any one of Claims 1 to 10, **characterized in that** the size of the tyres of the front axle is the same as the size of the tyres of the rear axle, the size of a tyre being defined by the E.T.R.T.O. standard.
